# EUROPEAN PATENT APPLICATION

(11) **EP 1 261 065 A2**
(43) Date of publication of application: **27.11.2002**
(21) Application number: 02291212.5
(22) Date of filing: 16.05.2002
(51) Int. Cl.: H01M 10/50

(54) **Thermal management blanketing and jacketing for battery system modules**

(30) Priority: 23.05.2001 US 862591
(71) Applicant: ALCATEL, 75008 Paris (FR)
(72) Inventor: Allen, Peter G., Lutherville, Maryland 21093 (US); Oweis, Salah, Ellicott City, Maryland 21042 (US); Chagnon, Guy, Germantown, Maryland 20874 (US)
(74) Representative: Korakis-Ménager, Sophie

(57) **Abstract**

The present invention is a thermal blanketing system used to manage the temperature of individual electrochemical cells within the modules of a single battery system. The present invention uses either a thin walled tube made from either a flexible or rigid material (i.e. plastic, etc.) which is wound in a fashion so at least one side of the tube makes contact with each individual cell, or uses a plurality of individual thermal jackets placed between battery cells such that at least some of the thermal jackets are contacted by at least two of the cells within the battery. In each of the above embodiments, each tube or jacket is filled with a thermal management fluid, chosen for its thermal management characteristics, and which flows throughout the tube or jackets, and acts either as a heat sink absorbing heat from the batteries to cool them, or as a heat source providing heat to the batteries as needed. Each tube or jacket has an inlet and exit manifold to allow the fluid to flow, and a pump is used to provide the flow and maintain pressure within the tubing or jackets.

## Description

### BACKGROUND OF THE INVENTION

### Field of the Invention

The present invention generally relates to the field of electrochemical batteries, in particular a thermal management system for controlling or managing the temperature of individual electrochemical cells within the modules of a battery system.

### Discussion of Related Art

It is commonly known that electrochemical batteries are used in many applications such as electrical vehicles, industrial systems, etc. When these batteries are used in these applications they are required to provide a large amount of energy and power. In doing so they generate large amounts of heat. Additionally, in these applications batteries are required to function in less than perfect conditions for efficient battery usage. This is because the environment can be too cold or too hot for efficient battery use.

There are currently a number of systems that have been developed to control the temperature of batteries and battery compartments for use in various applications. However, because different more demanding uses for batteries are being developed, more efficient thermal control systems are needed that are capable of maintaining an efficient battery operating temperature in more extreme operating conditions.

Many of the current systems use air ventilation system to cool batteries and the battery cells. The problem with these systems is that they often take up more space than is practical for the use of the battery, such as in automobile applications, and further the use of air cooling is not very efficient, thus greatly reducing the effectiveness of the cooling system. The poor efficiency of the air cooling or heating methods adversely affects the life of the battery cells, particularly in extreme operating conditions.

The present invention is intended to overcome one or more of the above problems.

### SUMMARY OF THE INVENTION

The present invention is a thermal blanketing or tubular system used to manage the temperature of electrochemical cells within the modules of a single battery system. To do this the present invention uses either a thin walled tube made from a flexible or rigid material (i.e. plastic, etc.) which is wound in a fashion so at least one side of the tube makes contact with each individual cell, or uses a plurality of individual thermal jackets placed between battery cells such that at least some of the thermal jackets are contacted by at least two of the cells within the battery.

In each of the above embodiments, each tube or jacket is filled with a thermal management fluid, chosen for its thermal management characteristics, and which flows through the tube or jackets, and acts either as a heat sink absorbing heat from the cells to cool them, or as a heat source providing heat to the batteries as needed. Each tube or jacket has an inlet and exit manifold to allow the fluid to flow, and a pump or flow manifold is used to provide the flow and maintain pressure within the tubing or jackets.

It is preferable that the walls of the electrochemical cells and the tube or jacket be made of a material conducive to allowing the transfer of heat easily and efficiently. Additionally, it is also preferable to provide an efficient thermal medium between the tube and the cell, to aid in the thermal transfer between tube and cell. Finally, in the preferred embodiment of the present invention, a thermal exchanger or unit which would either heat or cool the fluid may be used to provide more efficient and effective thermal management of the battery and cells.

### BRIEF DESCRIPTION OF THE DRAWINGS

The advantages, nature and various additional features of the invention will appear more fully upon consideration of the illustrative embodiment of the invention which is schematically set forth in the drawings, in which:
Figure 1 is a diagrammatical representation of an electrochemical battery with a number of individual cells and a thermal management blanket according to the first embodiment of the present invention;
Figure 2 is a diagrammatical representation of an alternate configuration of the thermal blanket shown in Figure 1;
Figure 3 is a diagrammatical representation of another alternate configuration of the thermal blanket shown in Figure 1;
Figure 4 is a diagrammatical representation of another alternate configuration of the thermal blanket shown in Figure 1;
Figure 5 is a diagrammatical representation of another alternate configuration of the thermal blanket shown in Figure 1;
Figure 6A is a diagrammatical representation of the side of a thermal jacket used in the second embodiment of the present invention;
Figure 6B is a diagrammatical representation of the thermal jacket shown in Figure 6A shown from a top view;
Figure 7 is a diagrammatical representation of a electrochemical battery assembly with thermal jackets according to the second embodiment of the present invention;
Figure 8 is a diagrammatical representation of a single cell in the electrochemical battery of Figure 7 having thermal jackets according to the second embodiment of the present invention;
Figure 9 is a diagrammatical representation of a single cell in the electrochemical battery of any of Figures 1-5 shown with a thermal jacket and a thermal medium; and
Figure 10 is a diagrammatical representation of a metallic single cell in the electrochemical battery of any of Figures 1-5 shown with a thermal jacket of the present invention, a thermal medium, and a shrink-sleeve on the cell.

### DETAILED DESCRIPTION OF THE INVENTION

The present invention will be explained in further detail by making reference to the accompanying drawings, which do not limit the scope of the invention in any way.

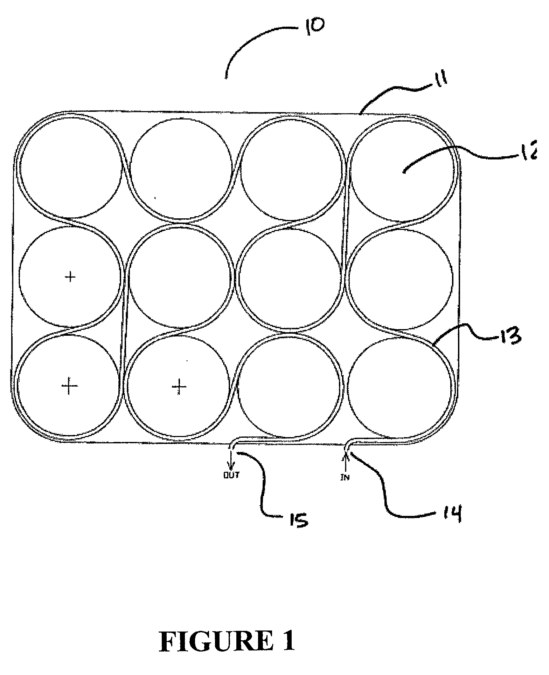

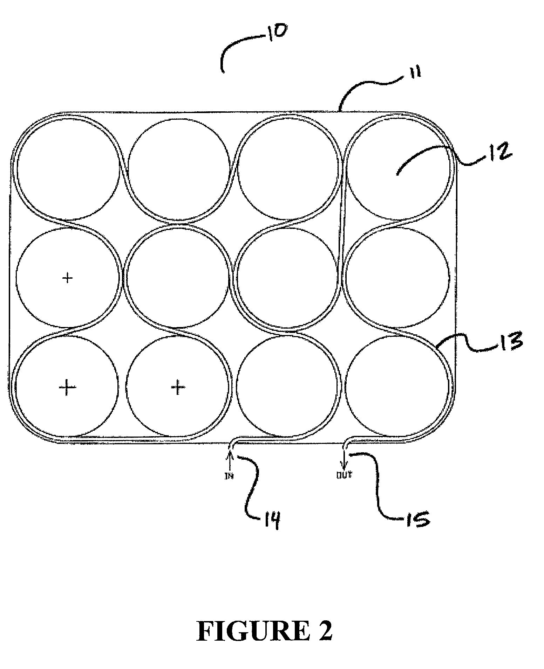

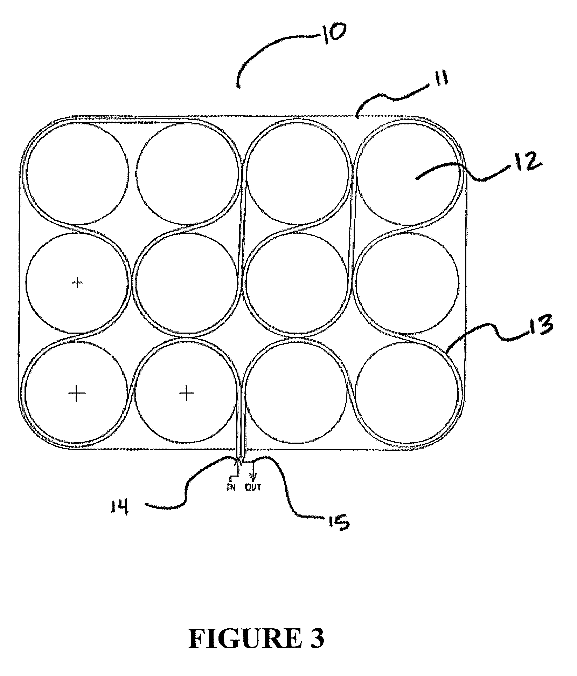

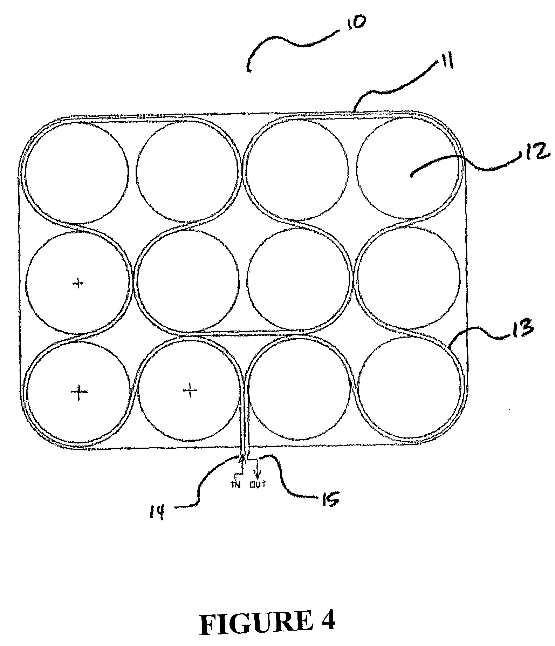

Turning now to Figures 1-4, these Figures depict an electrochemical battery 10 with twelve individual cells 12 and a thermal blanket or tube 13 according to the first embodiment of the present invention. It should be noted that the present invention can be used with batteries having any number of cells, and is not limited to twelve cell batteries. Each of Figures 1-4 show that the thermal blanket or tube 13 makes contact with each of the individual cells 12 as it winds through the battery casing 11. Further, it can be seen in these figures that many different types of winding configurations of the blanket or tube 13 can be used, and the present invention is not limited to the embodiments shown in the Figures.

As shown in these Figures, the blanket or tube 13 has both an entrance manifold 14 and an exit manifold 15. This is to allow for flow of the thermally conductive liquid (not shown) to be used in the blanket 13 to control the temperatures of the cells 12 and thus the battery 10. It is desirable to have as much of the cell 12 surfaces covered by the tube or blanket 13 to provide as large a thermally conductive surface as reasonably possible. This will allow optimization of the thermal control process. The module design, cell configuration and desired (or actual) operating temperature difference from cell to cell will dictate the amount of contact between the cell surfaces and the thermal blanket or tube 13.

In the preferred embodiment, the blanket or tube 13 is sized to cover as much of the length of the cell (i.e. height of the cell) as possible between the cell boards or cell support structure (not shown). Also, the thickness of the tube or blanket 13 walls is to be as thin as possible for the material used for the blanket. This is to ensure that the best possible heat transfer characteristics between the cells and the thermal medium used in the tube or blanket. However, in determining the optimal thickness of the tube or blanket 13 wall, the heat transfer optimization must be balanced with the need for having a wall thickness large enough to ensure proper manufacturing of the of the tube at a reasonable cost, and to prevent the seepage or leaking of the thermal liquid from the tube or blanket 13. The optimal thickness will vary depending on the material to be used.

The tube or blanket 13 may be manufactured from any material suitable for this purpose, i.e. metal, plastic, etc. However, it is desirable that the blanket or tube 13 be made from a material that is thermally conductive to allow the transfer of heat to or from the thermal liquid passing through the tube or blanket. Further, the material can either be flexible or rigid depending on the manufacturing capabilities or needs.

The cross-sectional shape of the tube or blanket 13 can be any shape conducive to allowing proper thermal management of the individual cells 12 in the battery 10. In a standard electrochemical battery the preferred cross-section of the tube 13 would be rectangular. This will allow maximum surface contact between both the cells 12 and the blanket 13. However, the shape can be changed depending on the configuration and shape of the cells and battery, and may be optimized for each different battery configuration. Moreover, depending on the cell and battery configuration the cross-section shape or size can change in the tube or blanket 13 used in a battery. This would allow for manufacture optimization. However, if the shape of the cross-section of a single tube is to change along its length, the change should not be significant so as to adversely affect the proper flow of the liquid within the tube.

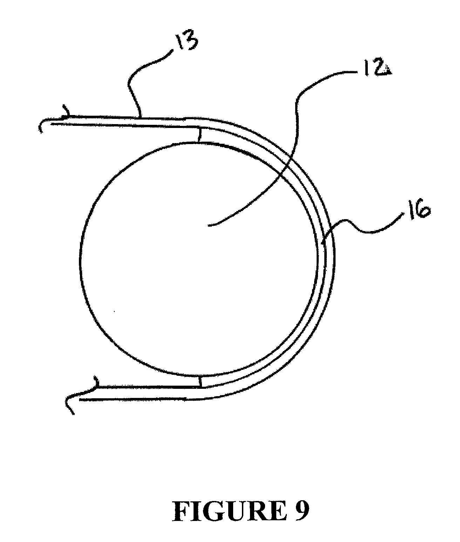

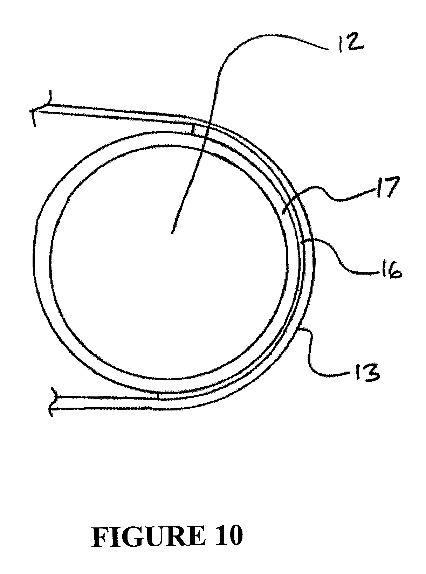

In the preferred embodiment of the first embodiment of the present invention a thermally conductive material or medium 16 could be placed between the blanket 13 and cells 12. See Figure 9, showing a close-up view of a single cell 12 of the present invention with a thermal medium 16 placed between the cell and the tube 13. An example of this material would be thermally conductive grease. When the tube or blanket is made from a thermally conductive plastic material it is important that the grease used be mainly thermally conductive and have little or no capability of conducting electricity. This material enhances the thermal conductance between the cells and the blanket or tube. When a metallic thermally conductive material is used for the tube or blanket it is important to have an electrical insulating material 17 between the tube 13 and the cell 12, to prevent the unnecessary transfer of electricity between cells though the tube or blanket 13. See Figure 10, which shows a cell 12 having a insulating material 17, a thermal conductive medium 16 and the tube 13. This electrical insulation can be achieved by using any shrink-sleeve type material commonly used to insulate electrochemical cells.

Each of the intake and exit manifolds 14, 15 allows for flow of the thermally managing liquid through the tube 13. The manifolds 14, 15 are connected to a fluid flow manifold or device such as a pump (not shown) which would be used to provide the flow of the liquid through the tube. Any type of thermally conductive liquid can be used, however, it is important to ensure that the liquid used would not deteriorate the tube or blanket walls. Any commonly known or used flow manifold, flowing device, or pump can be used to provide the fluid flow through the tube. In the preferred embodiment, the fluid flow device will provide enough flow to ensure that a slight internal pressure is maintained within the tube to aid in maintain the flow of the liquid while at the same time preventing the walls of the tube or blanket 13 from collapsing. This is particularly true when the walls of the tube are made thin. Tube collapse could also be prevented by using additional structural support within the tube, such as ribs (not shown), or providing additional tube wall reinforcement (not shown). If internal ribs are used they should be configured such that they do not adversely interfere with the liquid flow to ensure optimal thermal management.

In the preferred embodiment, in additional to the above flow manifold, the tube or blanket 13 would be connected to a liquid heater/cooler to provide thermal control of the battery by controlling the temperature of the liquid. It is desirable to have this capability within the flow manifold, or pump, to reduce the number of components and space, but it is not necessary to the present invention. Further, depending on the application of the battery it may not be necessary to have both heating and cooling capability, but only one or the other. For instance, if the battery is used in a environment having continuous high temperatures, a heating capability would not be necessary.

Further, in this embodiment of the present invention one or more loops of the tube or blanket 13 may be required depending on the number of cells/rows of cells per module. If more than one loop is used, each of the individual loops can be connected to the same flow manifold to maintain even flow distribution. Further, it may be desirable to use more than one blanket in a single cell module to provide added thermal control or redundancy. In this configuration there could be two blankets 13 each covering one half of the height of the cells. In this configuration the blankets could be connected to the same or separate exit/entrance manifolds and flow manifolds depending on whether or not complete redundance is needed.

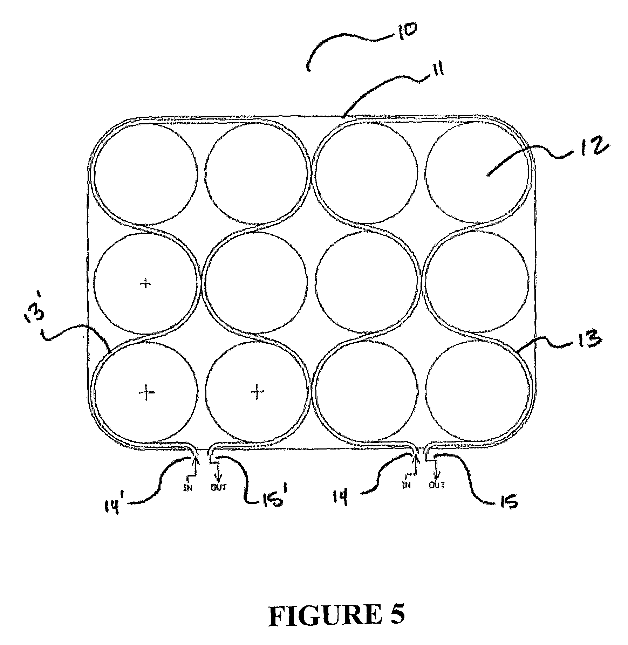

Figure 5 depicts an alternate configuration of the first embodiment of the present invention, where there are two blankets or tubes 13, 13', each thermally managing half of the cells 12 in the module 10. In this Figure, the blankets 13, 13' are shown with their own exit/entrance manifolds 14, 15 and 14', 15', respectively, but it is also possible to have each of the blankets 13, 13' connected to the same manifold, depending on the type of protection needed. Further, just as the blankets are connected to separate exit/entrance manifolds, they can be connected to a separate flow manifold and heating/cooling apparatus depending on the system requirements and space constraints. It should be noted that the number of blankets contemplated by this invention is not limited to two, but can be any number required or practical for the particular battery and cell configuration.

The thermal management liquid used in the present invention can be any commonly known or used liquid that is known to have thermal management characteristics. In the preferred embodiment the liquid used rapidly absorbs or transfers heat from either the cells or the heater/cooler and/or rapidly cools down after being heated. Further, if excessive or extreme temperatures (either hot or cold) are to be experienced then this should be taken into account when choosing the liquid. The liquid should not break down or otherwise lose its thermal managing characteristics at extreme temperatures.

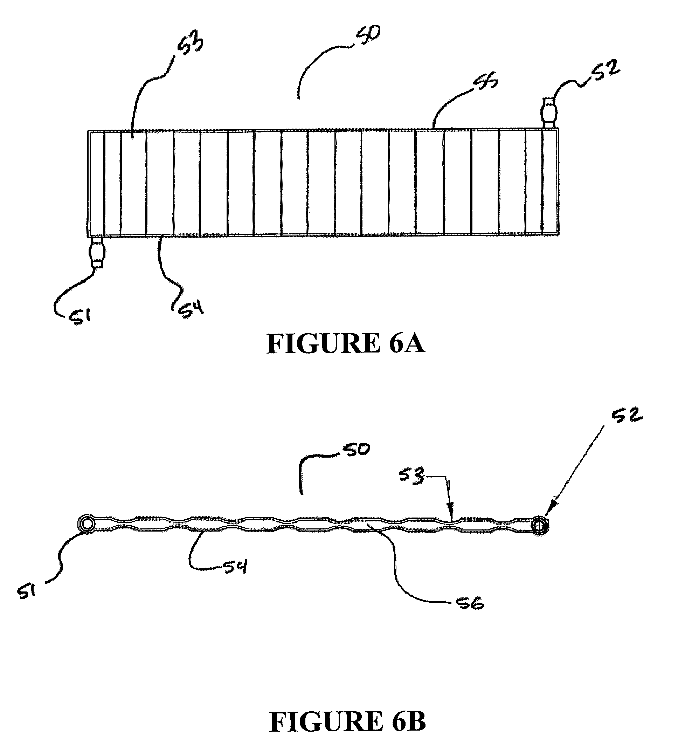

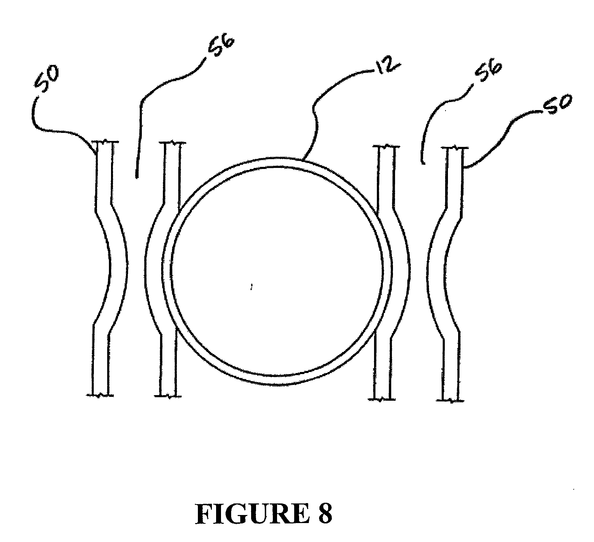

Turning now to Figures 6A to 8, these Figures depict a second embodiment of the present invention, where instead of winding tubes, there is a plurality of thermal jackets 50 used and positioned between the cells 12. The manufacture of the thermal jackets 50 in this embodiment may be similar to that discussed above with regard to the tube or jacket 13 of the previous embodiment. The materials used may be the same, and optimized for thermal control. Further, it is desirable to have the walls of the jacket 50 made as thin as functionally possible to ensure optimal thermal management of the cells 12. As shown in Figures 6A and 6B, in this embodiment, the jacket 50 is not a winding blanket, but can be a straight hollow member having both an intake manifold 52 and an exit manifold 51 to allow the passage of the thermal management liquid. It should be noted that although the jacket in Figures 6A and 6B is shown as being straight, it may have bends or be otherwise configured to be adapted to specific battery or cell configurations, for example having a 90 degree bend. Further, the jacket 50 has a plurality of radiused depressions 53 which are configured to snugly receive the cells 12 in the battery, and are adjacent to raised portions 54. The shape and contour of the depressions 53 are configured to match the shape or configuration of the cells to ensure maximum surface contact, resulting in maximum efficiency of the thermal protection system.

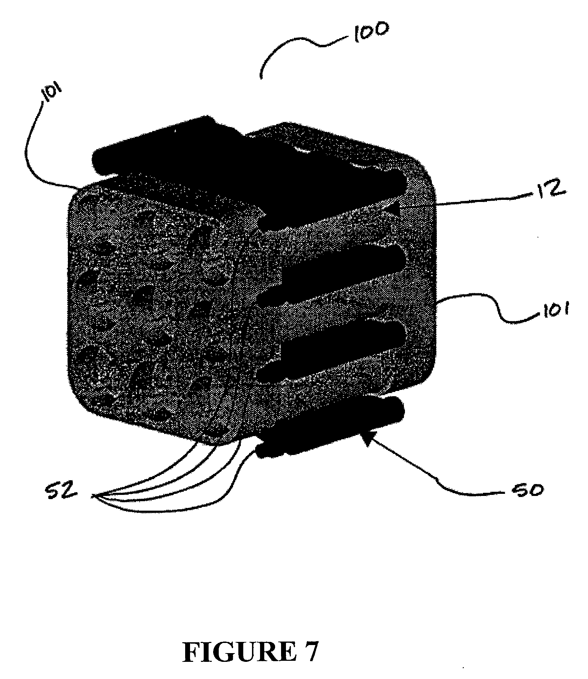

Figure 7 shows a typical nine cell electrochemical battery module 100, having two cell supports 101, with the two thermal jackets 50, of the second embodiment of the present invention, positioned on the outside edges of the outer cells and two jackets 50 between the three rows of cells 12. It should be noted that similar to the first embodiment of the present invention, the second embodiment can be used with any type of battery/cell configuration. It is not necessary that the jackets 50 be of the same length or size and they can be modified to adapt to any battery or cell configuration.

Much like the previous embodiment, it is desirable in the present embodiment to have a thermally conductive grease, or other medium, positioned between the cells and the jackets. Further, as with the previous embodiment, the type of material used for the jacket walls will dictate the type of thermal medium to be used between the cells and the jacket.

In this embodiment of the present invention, the jackets can either be connected to individual flow manifolds or to a common flow manifold. If the jackets are connected to a common manifold they can be connected in either parallel or in series depending on the preferred configuration. In either configuration it is desirable to maintain constant flow and pressure to ensure proper and even thermal management of the battery and cells.

Further, as with the previous embodiment, depending on the system requirements, battery configuration and requirements and space restrictions all of the jackets may be connected through a common manifold to a flow manifold and heater/cooler or may be divided among two or more redundant or independent systems.

It is of course understood that departures can be made from the preferred embodiments of the invention by those of ordinary skill in the art without departing from the spirit and scope of the invention that is limited only by the following claims.

## Claims

1. A thermal management system for a battery including a plurality of cells, comprising:
at least one duct contacting an outer wall of each of said cells adapted to allow a liquid medium to flow therethrough.

2. A thermal management system according to claim 1, wherein said liquid medium is thermally conductive.

3. A thermal management system according to claim 1, wherein said at least one duct is made from a thermally conductive material.

4. A thermal management system according to claim 1, further comprising a thermally conductive medium positioned between said at least one duct and said cells where said duct contacts said cells.

5. A thermal management system according to claim 1, wherein said duct has an inlet manifold to allow said liquid to flow into said duct, and an exit manifold to allow said liquid to flow out of said duct.

6. A thermal management system according to claim 1, further comprising a heating and cooling apparatus to heat or cool said liquid.

7. A thermal management system according to claim 1, further comprising a pump which causes said liquid to flow through said duct.

8. A thermal management system according to claim 7, wherein said pump includes a heating and cooling apparatus to heat or cool said liquid.

9. A thermal management system according to claim 1, wherein said at least one duct has a rectangular cross-section.

10. A thermal management system according to claim 1, wherein said at least one duct is at least partially wrapped around each of said cells.

11. A thermal management system for a battery including a plurality of cells, comprising:
at least one thermal jacket for receiving a liquid thermal medium;
wherein said at least one thermal jacket is located between and contacts adjacent one of said cells.

12. A thermal management system according to claim 11, wherein said liquid medium is thermally conductive.

13. A thermal management system according to claim 11, wherein said at least one thermal jacket is made from a thermally conductive material.

14. A thermal management system according to claim 11, further comprising a thermally conductive medium positioned between said at least one thermal jacket and said cells where said thermal jacket contacts said cells.

15. A thermal management system according to claim 11, wherein said at least one thermal jacket has an inlet manifold to allow said liquid to flow into said thermal jacket, and an exit manifold to allow said liquid to flow out of said thermal jacket.

16. A thermal management system according to claim 11, further comprising a heating and cooling apparatus to heat or cool said liquid.

17. A thermal management system according to claim 11, further comprising a pump which causes said liquid to flow through said at least one thermal jacket.

18. A thermal management system according to claim 17, wherein said pump includes a heating and cooling apparatus to heat or cool said liquid.

19. A thermal management system according to claim 11, wherein said at least one thermal jacket has a plurality of cell receiving portions shaped to fit at least some of an outer surface of said cells.

20. A thermal management system according to claim 11, wherein said at least one thermal jacket has a rectangular cross-section.

21. A thermal management system according to claim 11, wherein said at least one thermal jacket is at least partially wrapped around each of said cells.

22. A thermal management system for a battery including a plurality of cells, comprising:
a plurality of thermal jackets for receiving a liquid thermal medium;
wherein each of said plurality of thermal jackets is located between adjacent ones of said cells.

23. A thermal management system according to claim 22, wherein said liquid medium is thermally conductive.

24. A thermal management system according to claim 22, wherein at least one of said plurality of thermal jackets is made from a thermally conductive material.

25. A thermal management system according to claim 22, further comprising a thermally conductive medium positioned between at least one of said plurality of thermal jackets and said cells where said at least one of said plurality of thermal jackets contacts said cells.

26. A thermal management system according to claim 22, wherein at least one of said plurality of thermal jackets has an inlet manifold to allow said liquid to flow into said at least one of said plurality of thermal jackets, and an exit manifold to allow said liquid to flow out of said at least one of said plurality of thermal jackets.

27. A thermal management system according to claim 22, further comprising a heating and cooling apparatus to heat or cool said liquid.

28. A thermal management system according to claim 22, further comprising a pump which causes said liquid to flow through said at least one thermal jacket.

29. A thermal management system according to claim 28, wherein said pump includes a heating and cooling apparatus to heat or cool said liquid.

30. A thermal management system according to claim 22, wherein at least one of said plurality of said thermal jackets has a plurality of cell receiving portions shaped to fit at least some of an outer surface of said cells.

31. A thermal management system according to claim 22, wherein at least one of said plurality of thermal jackets has a rectangular cross-section.

32. A thermal management system according to claim 22, wherein at least one of said plurality of thermal jackets has a changing cross-section throughout the length of said at least one thermal jacket.

33. A thermal management system according to claim 22, wherein each of said plurality of thermal jackets has an inlet manifold to allow said liquid to flow into each of said plurality of thermal jackets, and an exit manifold to allow said liquid to flow out of each of said plurality of thermal jackets.

34. A thermal management system according to claim 22, further comprising a heating and cooling apparatus to which each of said plurality of said thermal jackets is connected.

35. A thermal management system according to claim 34, wherein each of said plurality of said thermal jackets is connected to the same heating and cooling apparatus to heat or cool said liquid.

36. A thermal management system according to claim 35, wherein each of said plurality of said thermal jackets is connected in parallel to said heating and cooling apparatus.

37. A thermal management system according to claim 35, wherein each of said plurality of said thermal jackets is connected in series to said heating and cooling apparatus.

38. A thermal management system according to claim 22, further comprising at least one pump, wherein each of said plurality of thermal jackets is connected to said at least one pump which causes said liquid to flow through said thermal jackets.

39. A thermal management system according to claim 38, wherein each of said plurality of thermal jackets is connected to the same pump which causes said liquid to flow through each of said thermal jackets.

40. A thermal management system according to claim 39, wherein each of said plurality of said thermal jackets is connected in parallel to said pump.

41. A thermal management system according to claim 39, wherein each of said plurality of said thermal jackets is connected in series to said pump.

42. A thermal management system according to claim 38, wherein said pump includes a heating and cooling apparatus to heat or cool said liquid.

43. A thermal management system according to claim 39, wherein said pump includes a heating and cooling apparatus to heat or cool said liquid.

44. A thermal management system according to claim 22, wherein each of said plurality of said thermal jackets has a plurality of cell receiving portions shaped to fit at least some of an outer surface of said cells.

45. A thermal management system according to claim 22, wherein each of said plurality of thermal jackets has a rectangular cross-section.

46. A thermal management system according to claim 22, wherein each of said plurality of thermal jackets has a changing cross-section throughout the length of said thermal jackets.

47. A method of thermally managing the temperature of a battery including a plurality of cells by thermally managing the temperature of said cells, comprising:
passing at least one hollow tube among at least some of said cells so as to make contact with said at least some of said cells; and
passing a liquid medium through said at least one hollow tube.

48. A method of thermally managing the temperature of a battery including a plurality of cells according to claim 47, wherein said liquid medium is thermally conductive.

49. A method of thermally managing the temperature of a battery including a plurality of cells according to claim 47, wherein said at least one hollow tube is made from a thermally conductive material.

50. A method of thermally managing the temperature of a battery including a plurality of cells according to claim 47, further comprising placing a thermally conductive medium between said at least one hollow tube and said cells where said at least one hollow tube contacts said cells.

51. A method of thermally managing the temperature of a battery including a plurality of cells according to claim 47, wherein said at least one hollow tube has an inlet manifold to allow said liquid to flow into said at least one hollow tube, and an exit manifold to allow said liquid to flow out of said at least one hollow tube.

52. A method of thermally managing the temperature of a battery including a plurality of cells according to claim 47, further comprising heating said liquid in a heating apparatus connected to said at least one hollow tube.

53. A method of thermally managing the temperature of a battery including a plurality of cells according to claim 52, wherein said heating of said liquid is prior to said liquid passing through said at least one hollow tube.

54. A method of thermally managing the temperature of a battery including a plurality of cells according to claim 47, further comprising cooling said liquid in a cooling apparatus connected to said at least one hollow tube.

55. A method of thermally managing the temperature of a battery including a plurality of cells according to claim 54, wherein said cooling of said liquid is prior to said liquid passing through said at least one hollow tube.
